# EUROPEAN PATENT SPECIFICATION

(11) **EP 4 149 208 B1**
(45) Date of publication and mention of the grant of the patent: **19.06.2024**
(21) Application number: 21196681.7
(22) Date of filing: 14.09.2021
(51) Int. Cl.: H05B 6/64

(54) **CRISP PLATE FOR MICROWAVE OVENS**
BACKBLECH FÜR MIKROWELLENOFEN
PLAQUE À FONCTION CROUSTILLANTE POUR FOURS À MICRO-ONDES

(43) Date of publication of application: 15.03.2023
(73) Proprietor: Whirlpool Corporation, Benton Harbor, MI 49022 (US)
(72) Inventor: Khizar, Muhammad, 21024 Cassinetta di Biandronno (VA) (IT)
(74) Representative: PGA S.p.A., Milano, Succursale di Lugano

(56) References cited:
- EP-B1- 3 654 736
- IT-A1- MC20 090 176
- US-A- 5 449 887
- US-A1- 2006 237 451

## Description

### Field of the disclosure

The present invention relates to the technical field of the household appliances, in particular the technical field of the microwave ovens and parts thereof. More precisely, the present invention relates to a plate or a dish for supporting, in a microwave oven, food items during a heating or a cooking or a thawing process. Such plate or dish is generally known as "crisp plate" in the technical field of the present disclosure.

### Background

In the recent years, microwave ovens have diffused widely also thanks to the increase of their efficiency and of the possibility of cooking also complex foods provided by advanced functions that in past were not available for this kind of ovens.

The microwave ovens are provided with a muffle wherein a supporting plate, also known as "crisp plate" is provided. The supporting plate is configured to be heated by means of the electromagnetic radiation that the microwave oven in use radiates in the muffle.

The supporting plate is realized with a material that, once irradiated by an electromagnetic radiation, heats and diffuses the heat to the food; therefore, the supporting plate helps providing a heat source for assisting the cooking of the food from the bottom part thereof. The supporting plate may be configured to cause a browning of the food.

Electromagnetic radiation is generated typically by means of a magnetron arranged outside, but close to, the muffle and the radiation is directed to the muffle by means of a waveguide. Today's microwave ovens cook food by irradiating microwaves typically in the range of 2 - 3 GHz, and precisely exploiting the 2,4 - 2,5 GHz band, at least for compliance to national regulations and for the effectiveness these wavelengths have for heating foods.

Known supporting plates comprise a ferritic coating. The purpose of the ferritic coating is to be heated by the microwaves irradiated by the oven. The known supporting plates are subject to some drawbacks. Specifically, the known supporting plates have a limiting capability of absorbing microwave radiations, and this limits the amount of heat that they are able to generate. In other words, for reaching a predetermined target temperature, they require a significant amount of electromagnetic radiation power, which may overcook the food. Overcooking of the food may cause a substantial burning, far beyond a wished browning.

In addition, this causes a waste of energy: the microwave oven absorbs more current than that it could be required should the supporting plate properly and highly heat due to microwaves absorption. This, indirectly, causes a shortening of the expected lifetime of the magnetron. As a further side effect, this causes an increase in the time required to obtain a proper cooking of the food.

Moreover, the known supporting plates shown poor capacity of uniformly distributing the heat across their surfaces. A non-uniform distribution of the heat results in some spots or limited areas of the supporting plate being far hotter than others. This impacts on the quality of cooking, since it is known that for the vast majority part of cooking techniques, an uniform cooking temperature of the food is preferable in order to mitigate the risk of obtaining a food wherein some parts are not properly heated and/or wherein some other parts are overcooked or even burnt.

For a proper heating the materials with which the supporting plates are realized shall have a precise Curie temperature that shall comply with the application. Limitations of the Curie temperature may cause a serious alteration of the behavior of the material, and cause poor heat spreading properties. The cooking, in particular the browning of food in a supporting plate is related to the Curie temperature of the compounds forming the plate, and is in particular related to the Curie temperature of the layer that is conceived to generate heat when invested by the microwaves radiation.

Some supporting plates are at least partially realized in ceramic, which has shown a substantial transparency to the electromagnetic radiations at frequencies typically emitted by today's magnetrons. This implies that for achieving a proper cooking of the food from a bottom part thereof, an extra power is required to the magnetron.

Apart from the energy wasting in pure terms of physics, it is noted that an important parameter for today's production of household appliances, including microwaves, is the compliance to energy efficiency regulations, among which there is Energy Star. A poor energy management and/or requirement impacts on the compliance the oven has with respect to energy efficiency regulations.

The Applicant notes that the known supporting plates provide for a substrate having relevant mechanical properties and a coating for causing the heating of the plate. The known coatings require relevant thickness and expensive processing techniques.

It may be further noted that the coating may not trap bubbles. In fact, in this latter case, the air contained in the bubbles may heat thereby causing a cracking of the coating, that therefore may detach from the underlying substrate layer.

European patent EP3654736B1 (in the name of Whirlpool Corporation) discloses a liner for a crisp plate including ceramic nanoparticles in a polymer matrix, with carbon nanoparticles embedded and aligned therein. The polymer matrix of the crisp plate is a two-part pre-polymerized polymer. The carbon nanoparticles are enclosed in a liner that further comprises aluminum particles and nanocrystalline ceramic nanoparticles.

It has been found that due to the conductive nature of the aluminum the coating of the known crisp plates is not efficient enough against microwaves radiation absorption, especially when the microwaves are at a frequency of 2.45GHz.

An aim of the present disclosure is to provide a plate for a microwave oven, capable of overcoming or at least mitigating the drawbacks of the known supporting plates.

### Summary

The present invention provides a plate according to claim 1 and an assembly according to claim 15. Embodiments of the invention are set forth with the appended dependent claims.

The present disclosure refers to a peculiar plate conceived for overcoming the drawbacks of the known art.

### Figures

The invention will be described with a reference to the annexed figures. A brief description of the figures is hereinafter presented.
Figure 1 shows a schematic view of a microwave oven provided with a plate according to the present disclosure.
Figure 2 shows a section view of the plate according to the present disclosure.
Figure 3 shows a section view of the coating layer of an embodiment of the plate according to the present disclosure.
Figure 4 shows a section view of a coating layer of the plate according to the present disclosure.
Figure 5 shows a section view of a further embodiment of the plate according to the present disclosure.
Figure 6 shows a section view of a further embodiment of the plate according to the present disclosure.
Figure 7 shows a section view of a further embodiment of the plate according to the present disclosure.
Figure 8 shows a diagram of temperatures reached by several embodiments of the plate over time.
Figure 9 shows a diagram of temperature differentials over time of several embodiments of the plate.
Figure 10 shows a thermal image of the plate heated by a radiofrequency source.
Figure 11 shows a further embodiment of the plate according to the present disclosure.

### Detailed description

Reference number 1 shows a plate for a microwave oven (the device referenced with the number 1 may also be defined as a dish because the terms "plate" and "dish" shall be seen as synonyms in the present description). The plate 1 is configured to support food to be heated by a microwave oven, in particular by the electromagnetic radiation in use irradiated by the microwave oven 10. The plate 1 of the present disclosure is in particular a so-called "crisp plate", configured to allow the browning of the food therein contained when the plate is irradiated with a microwave electromagnetic radiation.

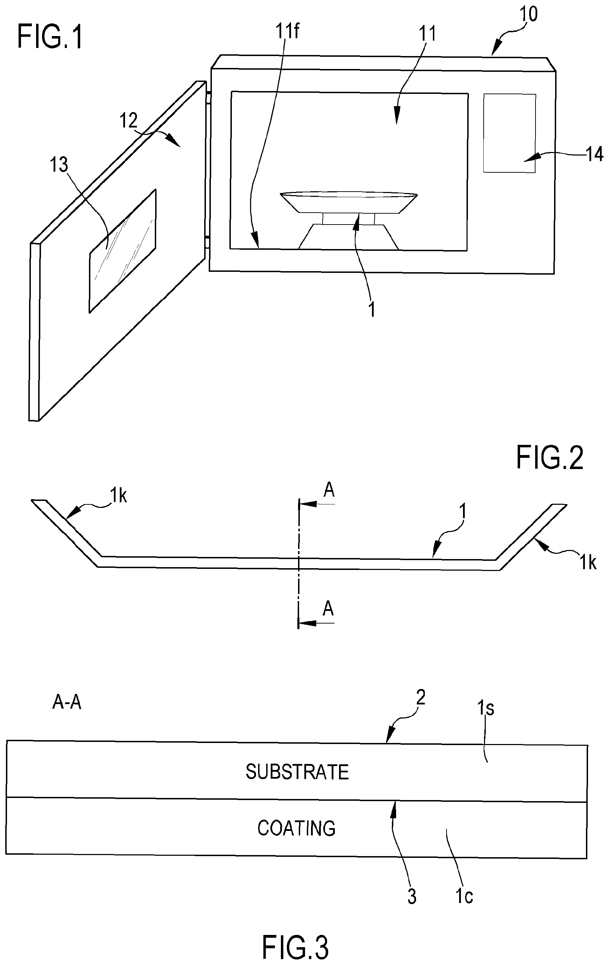

As shown in figure 1, the plate 1 is configured to be housed in the muffle 11 of the microwave oven 10, which further includes a support for the plate 1 which is installed on the bottom 11f of the muffle 11. The support is configured to cause the rotation thereof around an axis that, in use, is substantially vertical (and consequently the rotation of the plate 1). The rotation of the plate (caused by the rotation of the support) may be useful for obtaining a uniform cooking of the food, in particular in those cases wherein - e.g. due to the physical configuration of the waveguide that opens in the muffle - it is not possible to achieve a symmetrical and or uniform distribution of the electromagnetic radiations in the muffle 11.

The microwave oven 10 comprises a microwave source (in particular a magnetron) configured for generating an electromagnetic radiation, a cavity (in particular a muffle 11 internal to the casing of the microwave oven 10 and closable through a door 12) configured for accommodating food items to be heated or cooked or thawed and guiding means (in particular a waveguide) configured for allowing the electromagnetic radiation to be transferred from the microwave source to the cavity. Figure 1 further shows some schematic details of the microwave oven 10: a control unit and/or user interface 14, configured to allow the user select and/or see at least one among a proper cooking program, electromagnetic radiation power, cooking time, ventilation of the muffle 11, remaining cooking time, activation or deactivation of the oven. The microwave oven 10 further comprises a door 12, which preferably is provided with a transparent section 13, in particular a glass pane, conceived for allowing the user see the food while cooking when the door 12 is closed.

The aim of the plate 1 is to enhance the uniform heating of the food and the heating efficiency of microwave oven for improving the cooking performances.

Figure 2 shows a section of the plate 1 according to the present disclosure. As it can be seen, the plate 1 comprises a central substantially flat portion and an external raised portion 1k. In an embodiment, which is clearly not limiting albeit preferable, the plate 1 presents a substantially axisymmetric shape. This means that, in this specific embodiment, the external raised portion 1k defines a perimetric raised ring or wall suitable to allow the plate 1 to contain substantially fluid and/or liquid food, while mitigating the risk of dispersion during the cooking in the muffle 11.

The external raised portion 1k defines at least one wall that is inclined with respect to the central substantially flat portion. In an embodiment, the external raised portion 1k may be substantially orthogonal with respect to the central substantially flat portion.

Figure 3 shows a first embodiment of the plate 1 according to the present invention and in detail proposes a detailed view of the layers composing the plate 1. Figure 3 could be seen as a section according to line A-A of figure 2 of a portion of the plate 1.

In the embodiment of figure 3, it can be seen that the plate 1 comprises a substrate layer 1s configured for supporting food items to be cooked in the microwave oven 10. In particular, the substrate layer 1s is configured to have a robustness and/or has a rigidity sufficient to realize a self-sustaining shape of the plate 1 even without the help of any further layer. In other words, the substrate 1 is configured to sustain at least the weight of the food that is typically cooked in a microwave oven.

The thickness of the substrate layer 1s is chosen by the technician in accordance to the overall size of the plate 1. Preferably, albeit in a non-limiting extent, the thickness of the substrate layer 1s, measured along a direction that is substantially orthogonal to the plane along which the substrate layer 1s mainly extends, is substantially constant.

The plate 1 comprises at least a first coating layer 1c configured to be heated by means of the electromagnetic radiation in use irradiated by the microwave oven 10. In particular, the purpose of the coating layer 1c is to generate heat when invested by the electromagnetic radiation irradiated by the microwave oven. In particular, the material of the coating layer 1c is suitable to generate heat when invested by an electromagnetic radiation in the field of the microwaves (300 MHz to 300 GHz). The Applicant notes that, in general, consumer microwave ovens exploit the ISM microwaves band of 2,4 - 2,5 GHz (formally, the carrier lays at 2,45 GHz), and for such reason the coating layer 1c may be preferably particularly configured to generate heat when radiated by a radiation in the 2 - 3 GHz band.

Albeit this shall not be considered limiting, a preferred thickness of the coating layer 1c lies in the range 1mm to 4.5mm, preferably 1.5mm to 4mm, more preferably 2mm to 3.5mm, even more preferably 2.5mm to 3mm. In an embodiment, the coating layer 1c is obtained through injection moulding (this however shall not be seen as a limitation since the coating layer 1c may alternatively applied e.g. by being sprayed on the substrate layer 1s).

Given a first thickness for the substrate layer 1s and given a second thickness for the coating layer 1c, in a preferred and non-limiting embodiment, the first thickness is greater than the second thickness.

Preferably, albeit in a non-limiting extent, the thickness of the coating layer 1c, measured along a direction that is substantially orthogonal to the plane along which the coating layer 1c mainly extends, is substantially constant.

The material with which the at least a first coating layer 1c is realized exhibits a selected Curie temperature lower than the desirable maximum temperature which is required by a proper food cooking.

The Curie temperature is the temperature beyond which a ferromagnetic material loses some intrinsic properties as the non-univocal correspondence between the external field and magnetization and therefore behaves similarly to a paramagnetic material.

The choice of materials having a proper Curie temperature is important to allow a proper cooking of the food in the microwave oven. In fact, in use, with the irradiation of the plate 1 by means of a microwave electromagnetic radiation, below the Curie temperature there is an energy absorption that causes an increase of the temperature of the material. In contrast, when the heating of the material causes its temperature to exceed the Curie temperature, independently of the electromagnetic radiation the energy absorption will substantially cease; in the areas of the material wherein the Curie temperature is exceeded, the conduction of heat is substantially stopped. The overall behavior of the plate 1 is such that it can reach a temperature ranging between 250°C and 290°C, more preferably, between 260°C and 280°C when subjected to a microwave electromagnetic radiation having a frequency in the range 2 - 3 GHz, more preferably in the range 2,4 - 2,5 GHz at a power of 900 - 950 W.

A contacting surface is defined between the at least a first coating layer 1c and the substrate layer 1s, this contacting surface being substantially planar; this helps reducing the risk that some air bubbles remain trapped between the two layers.

The coating layer 1c is specifically configured to improve the heat spreading, the spreading uniformity and the heating rate of the plate 1 when irradiated by such electromagnetic radiation.

In detail, the coating layer 1c is a multilayer coating and comprises at least a first layer 1c' and a second layer 1c". The coating layer 1c comprises a ferritic material and a boron nitride compound. Boron nitride (hBN) is an optimal choice when there is a requirement of heating by means of an electromagnetic radiation, especially within the 2 - 3 GHz band. In an embodiment, a substantially planar contacting surface is defined between the first layer 1c' and the second layer 1c".

Preferably, albeit in a non-limiting extent, the thickness of the first layer 1c', measured along a direction that is substantially orthogonal to the plane along which the first layer 1c' mainly extends, is substantially constant. As well, the thickness of the second layer 1c", always measured along a direction that is substantially orthogonal to the plane along which the second layer 1c" mainly extends, is substantially constant.

Preferably, albeit in a non-limiting extent, the ferritic material comprises a manganese-zinc ferritic compound or a nickel-manganese ferritic compound or even a nickel-copper-zinc ferritic compound. Several embodiments of those two types of compound have been studied and selected for tests by the Applicant. Among those several embodiments, in particular the Ni_{0,5}Mn_{0,5}Fe₂O₄ compound, the family (MnₓZn_{y}Fe₂⁺¹_{-x-y})Fe₃+²O₄ of manganese-zinc ferritic compounds and the Ni_{0.60-}yCu_{y}Zn_{0.42}Fe_{1.98}O_{0,39} compound are ferritic compounds having Curie temperatures compatible with the scope of allowing a proper cooking, eventually browning, of the food.

In an embodiment, any of the aforementioned compounds, especially the Ni_{0.60-y}Cu_{y}Zn_{0,42}Fe_{1,98}O_{0,39} compound, may optionally comprise Bi₂O₂. The Ni_{0,5}Mn_{0,5}F₂O₄ compound has a Curie temperature of about 350° C.

Between the at least two layers 1c', 1c" forming the coating layer 1c, the first layer 1c' is an outer, superficial layer, and the second layer 1c" is an inner (or buried) layer and is in contact with the substrate layer 1s. This means that the first layer 1c' of the coating layer 1c is the layer that the user may touch when manipulating the plate 1 and that may also be in contact with the food, so that the first layer 1c' can advantageously have food-compatibility properties.

In an advantageous embodiment of the present disclosure (shown in figure 3), the coating layer 1c is applied only to the lower surface of the substrate layer 1s, i.e. only to the surface of the substrate layer 1s opposite to the surface destined for coming into contact with the food.

The Applicant specifically notes that, even if the schematic section of figure 3 shows the coating layer 1c laying below the substrate layer 1s, the present invention shall not be intended as to be limited in that the coating layer 1c, in use conditions of the plate 1, is necessarily below the substrate layer 1s. Indeed, the plate 1 (due to the food-compatibility of the coating layer 1c) may alternatively have the coating layer 1c above the substrate layer 1s in the conditions of use, i.e. in the spatial orientation depicted in figure 2 wherein the concavity of the plate is directed upwards.

The substrate layer 1s may be made of metal, e.g. aluminum. In a preferred and non-limiting embodiment, the substrate layer 1s is at least partially made of an electrically insulating material and, in particular, comprises a glass ceramic material and/or a glass-fiber reinforced plastic. This latter material provides a good electric insulation, which is important when the plate 1 is irradiated with such electromagnetic radiation generated by the magnetron of the microwave oven (since otherwise it may conduct the electric current induced by the electromagnetic radiation), and provides also a sufficient robustness to support the weight of the food. Moreover, the glass ceramic material has a very low reacting behavior with any acid or basic substance that may be found in foods.

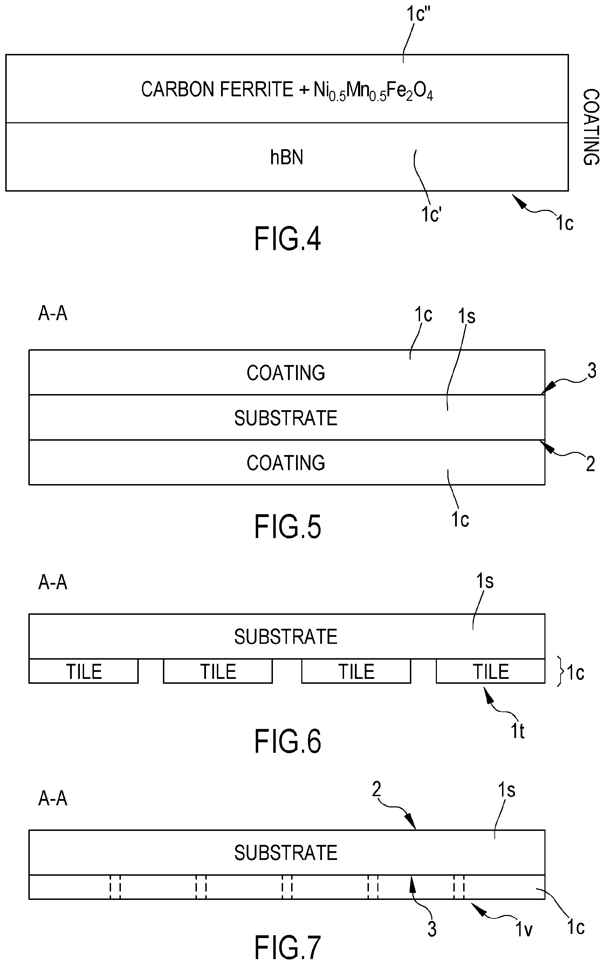

In the specific embodiment shown in figure 4, the first layer 1c' comprises a boron nitride (hBN) compound.

The second layer 1c" comprises a polymeric matrix, being provided with a silicone. In a preferred, non-limiting embodiment, one type of polymer considered to be suitable for the coating of the present concept is RBL-9050-50P Liquid Silicone Rubber. Two-pair, 10 to 1 mix, clear, fabric coating grade liquid silicone rubber offers unique homogeneous mixing. This two-part pre-polymerized polymer composite is the 10 to 1 mix, clear, fabric coating grade liquid silicone rubber which has an extremely low viscosity, no post-curing requirements, and excellent electrical insulating properties. Furthermore, the two-part pre-polymerized polymer composite is equally suitable for spray-on and dip coating applications. The 10 to 1 mix of this polymer refers to the 10 to 1 base to catalyst 87-RC ratio of the polymer.

The Applicant has tested several embodiments for the second layer 1c" comprising a predefined ratio between the ferritic powders and the polymer, especially the silicone. The tests were conducted with percentage ratios by weight (wt%) between the ferritic powders and silicones between 70:30 and 90:10, and in particular with percentage ratios by weight (wt%) between the ferritic powders and silicones between 75:25 and 85:15. Tests were conducted with both solid and liquid silicones. Hereinafter an excerpt of four tests performed by the Applicant is proposed.

Test 1: in one non-limiting embodiment the percentage ratio by weight (wt%) between the ferritic powders and the silicone was 78:22; in test 1, the silicone was solid silicone.

Test 2: in another non-limiting embodiment the percentage ratio by weight (wt%) between the ferritic powders and the silicone was 80:20; in test 2, the silicone was solid silicone.

Test 3: in another non-limiting embodiment, the percentage ratio by weight (wt%) between the ferritic powders and the silicone was 82:18; in test 3, the silicone was solid silicone.

Test 4: in another non-limiting embodiment, the percentage ratio by weight (wt%) between the ferritic powders and the silicone was 82:18; in test 4, the silicone was liquid silicone.

In a preferred, non-limiting embodiment, the polymeric matrix comprises a bi-component, pre-polymerized polymer. Precisely, the second layer 1c" may result as a composite ferritic-polymer-carbon layer.

In the specific embodiment shown in figure 4, the second layer 1c" comprises the Ni_{0,5}Mn_{0,5}Fe₂O₄ compound and preferably is constituted by the Ni_{0,5}Mn_{0,5}F₂O₄ compound, excepting impurities.

In another embodiment, not shown in figures, the second layer 1c" comprises the family (MnₓZn_{y}Fe₂⁺¹_{-x-y})Fe₃+²O₄ of manganese-zinc ferritic compounds and preferably is constituted by the family (MnₓZn_{y}Fe₂⁺¹_{-x-y})Fe₃+²O₄ of manganese-zinc ferritic compounds, excepting impurities.

The Ni_{0,5}Mn_{0,5}Fe₂O₄ compound, or the family (MnₓZn_{y}Fe₂⁺¹_{-x-y})Fe₃+²O₄ of I manganese-zinc ferritic compounds, and the polymeric matrix are blended together.

The second layer 1c" of the coating layer 1c further comprises also a carbon material which is further blended, in particular uniformly blended, with the ferritic material. In detail, the embodiment of figure 4 shows that the second layer 1c" comprises the Ni_{0,5}Mn_{0,5}Fe₂O₄ compound uniformly blended with the carbon material.

Another embodiment comprises the second layer 1c" being provided with any of the compounds of the family (MnₓZn_{y}Fe₂⁺¹_{-x-y})Fe₃+²O₄ of manganese-zinc ferritic compounds blended with the carbon material. Another embodiment comprises the second layer 1c" being provided with the Ni_{0.60-y}Cu_{y}Zn_{0,42}Fe_{1,98}O_{0,39} compound blended with the carbon material.

In an embodiment, which is non-limiting, the carbon material comprises a carbon ferritic powder. The carbon ferritic powder exhibits a low Curie temperature, which lays around 210° C.

In terms of structure of the components of the coating layer 1c, the Applicant studied several types of carbon materials and realised that a particularly efficient material may comprise carbon nanotubes. As well, the Ni_{0,5}Mn_{0,5}Fe₂O₄ compound or any of the compounds of the family (MnₓZn_{y}Fe₂⁺¹_{-x-y})Fe₃+²O₄ of manganese-zinc ferritic compounds, or even the Ni_{0.60-y}Cu_{y}Zn_{0,42}Fe_{1,98}O_{0,39} compound, may comprise ferromagnetic nanowires. Exploiting nanotubes and nanowires properties allows realizing very precise, dense layers, whose property of heating distribution is uniform. As well, exploiting nanotubes and nanowires allows realizing a uniform surface of the layers, which therefore can be sandwiched together in a very precise way. Furthermore, exploiting nanotubes and nanowires properties allows realizing also very thin layers. Albeit this shall not be considered limiting, the nanotubes may be single-walled nanotubes or double-walled nanotubes. In an embodiment, the nanotubes may have a common, or unidirectional, orientation.

The Applicant realised as well that, when the plate 1 is heated by the electromagnetic radiation, an optimization of the performances of heating rate and distributioncan be obtained by choosing specific ranges of weight ratios between the carbon material and the ferritic materials.

In detail, in an embodiment, in the second layer 1c" the carbon material is blended with the ferritic material in an amount of 1.0 wt% to 6.0 wt%. With the wording "wt%" it is intended percentage by weight. Specifically, in the second layer 1c" the carbon material is blended with the Ni_{0,5}Mn_{0,5}Fe₂O₄ compound or alternatively with any of the compounds of the family (MnₓZn_{y}Fe₂⁺¹_{-x-y})Fe₃+²O₄ of manganese-zinc ferritic compounds, or even alternatively with the Ni_{0.60-y}Cu_{y}Zn_{0,42}Fe_{1,98}O_{0,39} compound, optionally comprising Bi₂O₃, in an amount of 1.0 wt% to 6.0 wt%. This means that the ratio between the carbon material and the ferritic material may be, at the ends of the aforementioned ranges, 1.0 wt% of carbon material and 99.0 wt% of ferritic material or, at the opposite end of the range, 6.0 wt% of carbon material and 94.0 wt% of ferritic material.

Preferably, albeit in a non-limiting extent, in the second layer 1c" the carbon material is blended with the ferritic material in an amount of 1.5 wt% to 5.5 wt%.

Specifically, in the second layer 1c" the carbon material is blended with the Ni_{0,5}Mn_{0,5}Fe₂O₄ compound, or alternatively with any of the compounds of the family (MnₓZn_{y}Fe₂⁺¹_{-x-y})Fe₃+²O₄ of manganese-zinc ferritic compounds, or even alternatively with the Ni_{0.60-y}Cu_{y}Zn_{0,42}Fe_{1,98}O_{0,39} compound, optionally comprising Bi₂O₃, in an amount of 1.5 wt% to 5.5 wt%. This means that the ratio between the carbon material and the ferritic material may be, at the ends of the aforementioned ranges, 1.5 wt% of carbon material and 98.5 wt% of ferritic material or, at the opposite end of the range, 6.5 wt% of carbon material and 93.5 wt% of ferritic material.

The purpose of the aforementioned blending ratio is to keep at least the second layer 1c" substantially electrically insulating and/or showing, when irradiated with the electromagnetic radiation within the specifications as above disclosed, an optimal heating behavior when invested by a field of electromagnetic fields oscillating in the microwaves domain.

Figure 5 shows an alternative embodiment of the plate 1 herein disclosed, wherein the substrate layer 1s is sandwiched between two coating layers 1c. In fact, in Figure 5 it may be appreciated that a first coating layer 1c is arranged above the substrate layer 1s and that a second coating layer 1c is arranged below the substrate layer 1s.

In figure 5, the reference number 2 identifies a contacting surface between the substrate layer 1s and the first coating layer 1c laying below the substrate layer 1s and the reference number 3 identifies a contacting surface between the substrate layer 1s and the second coating layer 1c laying above the substrate layer 1s. Precisely, the first and the second coating layers 1c are arranged respectively at a first and at a second side of the substrate layer 1s and the first side and second side are opposite one with respect to the other. Those contacting surfaces are substantially planar, or at least have a plurality of planar portions allowing a proper contact with the juxtaposed layer.

Preferably, albeit in a non-limiting extent, at least one between the first contacting surface 2 and the second contacting surface 3 is substantially planar and/or is substantially parallel to the contacting surface that lays between the first layer 1c' and the second layer 1c".

In an embodiment, the first and the second coating layers have the same composition of materials; in another embodiment the first and the second coating layers may have a different composition of materials, especially concerning the composition of their second layers 1c", which in an embodiment may comprise different ferritic materials. The first and the second coating layers 1c have both the respective first layer 1c' comprising boron nitride (hBN) as above described. Said boron nitride is hexagonal boron nitride.

The coating layer 1c may have a flat surface or a textures surface. Figure 6 shows a particular embodiment of the plate 1 of the present disclosure. A coating layer 1c in form of a plurality of tiles 1t is applied to the substrate layer 1s. The composition of the coating layer 1c is the same as above described, and thus it is not completely repeated here. It is herewith remarked that all the tiles 1t have the first and the second layers 1c', 1c" as above described. Albeit this shall not be considered limiting, at least part of the plurality of tiles 1t has a thickness of 1,5mm to 3,5mm, preferably of 2mm to 3mm, more preferably of 2.5mm to 2.75mm.

In an embodiment, all tiles 1t of the plate 1 have the same composition of materials. In another embodiment, the plate 1 comprises at least a first tile and a second tile having a different composition of materials. Advantageously, the compositions of the tiles follows the axisymmetric shape of the plate 1 and may vary depending on the distance of the tile from the center of the plate 1, so that all tiles having the same distance from the center have the same composition of materials.

In an embodiment, the tiles 1t are separate one with respect to the other, and thus an interspace is left between two adjacent tiles 1t, such an interspace acting as venting channel and/or compensating for possible thermal expansion of the tiles 1t. In another embodiment, the tiles 1t are closely juxtaposed in such a way that substantially no interspace is left between two adjacent tiles 1t.

In order to provide a uniform outer surface of the plate 1, the tiles 1t have almost identical thickness with a substantially flat lower surface (where the lower surface is the surface of the tiles 1t opposite to that which contacts the substrate layer 1s).

The Applicant specifically notes that, even if the schematic section of figure 6 shows the plurality of tiles 1t forming the coating layer 1c laying below the substrate layer 1s, this shall not be intended that actually the plate 1 has the tiles 1t below the substrate layer 1s in the conditions of use, i.e. in the spatial orientation depicted in figure 2 wherein the concavity of the plate is directed upwards. In fact, the tiles 1t forming the coating layer 1c may be, in such conditions of use, also above the substrate layer 1s. In an embodiments, tiles 1t as previously described may be applied to both opposite surfaces of the substrate layer 1s.

Figure 7 shows another embodiment of the plate 1 according to the present disclosure, wherein a plurality of venting openings 1v is arranged in the coating layer 1c. It is noted that figure 7 shows an embodiment wherein only a single coating layer 1c is juxtaposed on the substrate layer 1s on its lower side. This does not mean that this is the only embodiment wherein the venting openings 1v may be present. In fact, venting openings 1v may be present also in embodiments of the plate 1 wherein the substrate layer 1s is sandwiched between a first and a second coating layers 1c similarly to the embodiment of figure 5. In this latter case, the venting openings 1v may be present in the first coating layer 1c (i.e. the coating layer laying below the substrate layer 1s) of in the second coating layer 1c (i.e. the coating layer laying above the substrate layer 1s) or in both the first and the second coating layers.

Preferably, albeit in a non-limiting extent, the venting openings 1v are in a form of holes that extend in a direction substantially transversal with respect to the direction along which the substrate layer 1s and/or the coating layers 1c substantially mainly extend. In particular, figure 7 shows an embodiment wherein the venting openings 1v are arranged along a direction substantially perpendicular to the direction along which the substrate layer 1s and/or the coating layer 1c mainly extends.

Figure 7 shows an embodiment wherein the venting openings 1v extend along the entire thickness of the coating layer 1c in such a way to expose substantially part of the underlying substrate layer 1s; this shall not be intended as limiting, since in another embodiment, which is not shown in the annexed figures, the venting openings 1v may extend only for part of the thickness of the coating layer 1c. An adequate distance between a couple of consecutive venting openings 1v is 3mm to 28mm, preferably 9mm to 18mm.

It shall be intended that the venting openings 1v may have a substantially constant cross-section, or a variable cross-section; the cross-section may assume a substantially rounded shape or any other type of shape. As an alternative to the venting openings 1v, venting channels (in particular extending along two directions transversal to each other) may be envisaged.

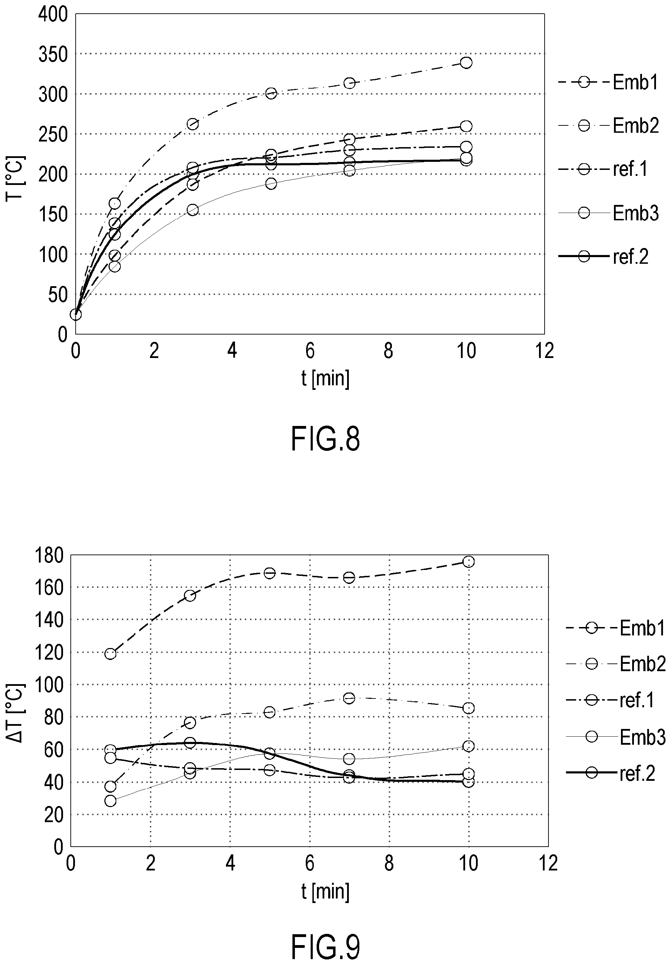

Figures 8 and 9 shows diagrams of absolute temperature and of temperature differentials over time that are obtained by several examples of plates 1 according to the present disclosure (embodiments 1, 2 and 3, abbreviated with emb.1, emb.2, emb.3) and according to the known art (ref.1, ref.2). Embodiments 1, 2, 3 differ to each other in that the active ingredients are present in the matrix in different loading concentrations. For instance, embodiments 1 and 2 differ to each other because of a different concentration of the carbon nanotubes (around 4,55% in embodiment 1 vs. around 1,5% in embodiment 2).

The graph of figure 8 is obtained by keeping constant the power of the electromagnetic radiation with which the plate 1 is irradiated (in particular at 950 W). It is noted that the embodiments 1 and 2 obtain the most important temperature increase over the time and this means that they heat more and before other embodiments and the plates known in the art.

In particular, it may be preferable that the coating layer 1c is configured to reach at least a surface temperature of 200°C, preferably at least of 210°C, more preferably at least of 220°C in 3 minutes, when the plate 1 is heated by a microwave oven 10 irradiating an electromagnetic radiation at a power of at least 750W or of at least 950W.

The graph of figure 9 shows a diagram that is obtained by keeping constant the power of the electromagnetic radiation with which the plate 1 is irradiated (in particular at 950 W). This diagram shows that the plate according to embodiment 1 has a temperature differential (the difference of the temperature between the hottest and the coldest part of the plate 1) which is higher than that of embodiment 2 and embodiment 3; the temperature differentials of embodiments 2 and 3 indeed are confined respectively within 100 degrees Celsius and within 60 degrees Celsius.

In particular, it may be preferable that the coating layer 1c is so configured that the temperature differential is kept in the ranges of 40 degrees Celsius to 60 degrees Celsius, when the plate 1 is heated by a microwave oven 10 irradiating an electromagnetic radiation at a power of at least 750W or of at least 950W.

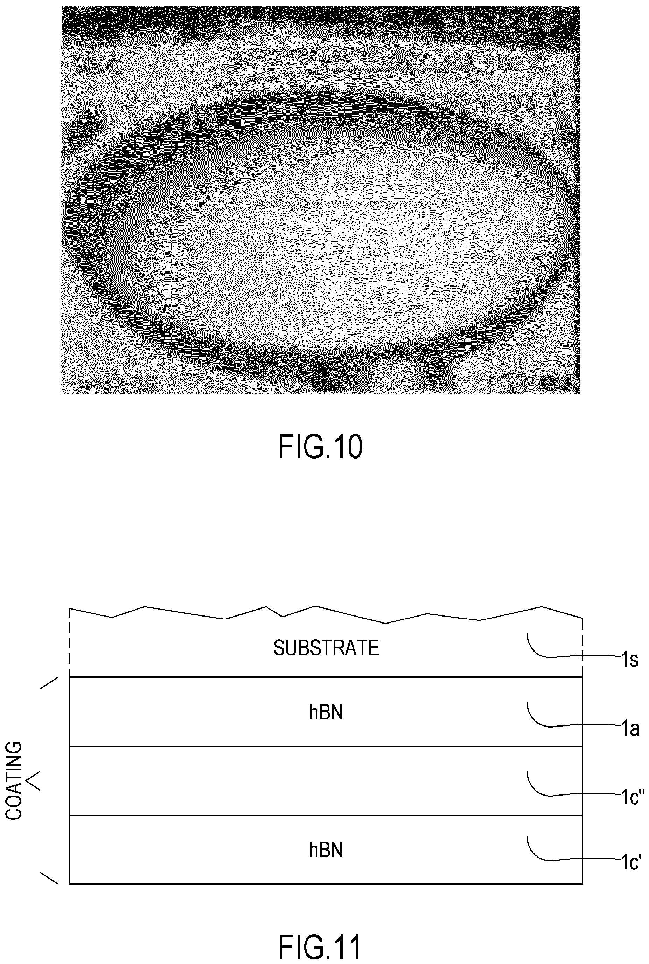

Figure 10 shows a thermal image captured by means of a thermal camera and referring to a specific embodiment of the plate 1 according to the present disclosure, being irradiated by an electromagnetic radiation at 2,45 GHz in a microwave oven. In figure 10, the zones of the image being darker are colder than the zones of the image being whiter. It is apparent that the central substantially flat portion of the plate 1 is substantially uniform in temperature.

Preferably, the plate 1 being provided with the at least one coating layer 1c as above described, is configured to keep a temperature difference between an hottest portion of the plate 1 and a coldest portion of the plate 1 within the range 20°C - 80°C, preferably within the range 30°C - 70°C, more preferably within the range 40°C - 60°C.

Figure 11 discloses a further embodiment of the plate according to the present disclosure (presented in particular as a variant to the embodiment of figure 4). The plate 1 comprises a substrate layer 1s that has the features already disclosed in the present document, which therefore are not repeated.

This latter embodiment comprises at least a first coating layer 1c which is provided with a first layer 1c', a second layer 1c" and an auxiliary layer 1a. Preferably, the first layer 1c' and the auxiliary layer 1a comprise a boron nitride compound, which is configured to cause a substantial distribution of heat induced, in use, by the electromagnetic radiation irradiated by the microwave oven 10.

Preferably, albeit in a non-limiting extent, the thickness of the auxiliary layer 1a, measured along a direction that is substantially orthogonal to the plane along which the auxiliary layer 1a mainly extends, is substantially constant.

Moving from the top to the bottom, the section of the plate 1 according to the embodiment of figure 11 is composed as follows. The top layer is formed by the substrate layer 1s. This latter is juxtaposed to the auxiliary layer 1a comprising the boron nitride compound. The auxiliary layer 1a is juxtaposed to the second layer 1c", and thus results sandwiched between the substrate layer 1s (at the top) and the second layer 1c" (at the bottom). In turn, the second layer 1c" is juxtaposed to the first layer 1c'. Thus, the second layer 1c" is sandwiched between the first layer 1c' and the auxiliary layer 1a.

While figure 11 shows that the coating layer 1c provided with the auxiliary layer 1a is only provided below the substrate layer 1s, it may be noted that according to a further non-limiting embodiment the coating layer 1c provided with such auxiliary layer 1a may be also provided, or alternatively provided, above the substrate layer 1s.

Venting openings and/or tiles as above described may be provided in the coating layer 1c also when this latter is provided with the auxiliary layer 1a. In this latter case, it may be noted that the venting openings 1v may extend from the first layer 1c up to the auxiliary layer 1a.

More generally, the present invention is open to several variants wherein above described layers are alternated in different ways. For instance, a variant may be contemplated wherein layers comprising the boron nitride compound are alternated to layers comprising the ferritic material.

In fact, the present invention may contemplate several sandwich structures for the coating of the plate 1, wherein the elements of the sandwich structures are in particular the base matrix with the ferrites, the boron nitride film and the carbon nanotubes. Inter alia, a sandwich structure formed by base matrix ferrite layers and boron nitride film layers alternating with each other may be envisaged. A further sandwich structure wherein several layers of base matrix are covered (internally and/or externally) by a boron nitride layer may be envisaged as well.

### Technical advantages

The advantages of the plate 1 according to the present disclosure are clear in view of the above description.

The plate 1 is capable of being heated very efficiently by microwaves radiation and this helps in reducing the power required to properly heat food from the bottom part thereof in a microwave oven.

The efficient heating obtained by the coating layer of the plate 1 here described indirectly allows to lengthen the lifetime of the magnetron of the microwave oven, since for a same reached cooking temperature, the amount of power required by the magnetron is lower than that is required with supporting plates of the known art.

The plate 1 according to the present disclosure helps achieving high-energy efficiency rates; in such a way, when the plate 1 is arranged in the microwave oven, the overall assembly realized by the microwave oven and the plate 1 complies easily with even stringent energy efficiency regulations.

The plate 1 according to the present disclosure helps in providing a proper food cooking and mitigates the risk of overcooking of the lateral and top portion of foods with respect to the lower portion of the food. In detail, the plate 1 helps to achieve a proper uniform cooking and/or browning of the food especially when in use is rotated by the support in the muffle of the microwave oven.

The plate 1 according to the present disclosure heats fast, and thus a small amount of time is required to achieve a proper cooking temperature of the bottom of the food.

The plate 1 according to the present disclosure has a very effective heating distribution behavior and, in particular, a very effective heating uniformity behavior; this reduces the impact of the food positioning on the plate 1 on the achievement of an optimal cooking.

The plate 1 according to the present disclosure is food-compatible, and therefore no issues are present in case any food is directly put in contact with the plate 1, especially with the coating layer 1c and/or with the substrate layer 1s. The plate 1 is hence immune from any toxicity threats.

The plate 1 according to the present disclosure is advantageously conceived in such a way to reduce the risk of permanence of air bubbles within, or between, the layers of the substrate or of the coating. This reduces the risk of detachment of the coating layer from the substrate layer when the plate 1 is heated.

The plate 1 is realized with materials that allow a cost-saving production and that allow to obtain very smooth surfaces, that provide an overall quality aspect when seen by a user.

The thickness of the coating layer 1c of the plate 1 according to the present disclosure can be further reduced with respect to the thickness of the coating layers of the known art without compromising the effectiveness of the heating distribution.

The thermal stability of the coating layer 1c is improved, and this contributes to lengthen the lifetime of the plate 1, mitigating the risk of detachment of the coating layer 1c with respect to the substrate layer 1s.

The plate 1 according to the present disclosure is very durable.

The plate 1 according to the present disclosure may be washed in a dishwasher with substantially no risk of significant affection or damaging to the coating layer.

It is herewith noted that the invention is not limited to the embodiments shown in the annexed figures; for such reason, in the following claims, reference numbers and signs are provided with the sole purpose of increasing the intelligibility of the claims, and for no reason shall be considered limiting.

It is finally clear that to the present invention additions and adaptation can be carried out without for this departing from the scope of protection provided by the claims.

## Claims

1. A plate (1) for a microwave oven (10), comprising:
- a substrate layer (1s) configured for supporting food items to be heated or cooked or thawed, in particular to be heated or cooked or thawed in said microwave oven (10), and
- at least a coating layer (1c) at least partially juxtaposed and in contact with the substrate layer (1s), wherein the coating layer (1c) is configured, in use, to be heated by means of an electromagnetic radiation, in particular by means of an electromagnetic radiation irradiated by the microwave oven (10),
wherein the coating layer (1c) is a multilayer coating comprising at least a first layer (1c') and a second layer (1c"),
**characterised in that** the first layer (1c') comprises a boron nitride compound and the second layer (1c") comprises a ferritic material.

2. A plate (1) according to claim 1, wherein the substrate layer (1s) comprises an electrically insulating material, said electrically insulating material comprising in particular glass ceramic and/or glass-fiber reinforced plastic.

3. A plate (1) according to claim 1 or claim 2, wherein the second layer (1c") comprises a polymeric matrix, the polymeric matrix being provided with a silicone, and wherein the polymeric matrix comprises a bi-component pre-polymerized polymer, optionally wherein the second layer (1c") is a composite ferritic-polymer-carbon layer.

4. A plate (1) according to one or more of the preceding claims, wherein the first layer (1c') is an outer, superficial, layer and wherein the second layer (1c") is in contact with the substrate layer (1s), said second layer (1c") being interposed between the substrate layer (1s) and the first layer (1c').

5. A plate (1) according to one or more of the preceding claims, wherein the second layer (1c") comprises a carbon material and wherein the second layer (1c") is a composite layer wherein the carbon material is blended, optionally uniformly blended, with the ferritic material.

6. A plate (1) according to claim 5, wherein the carbon material comprises carbon nanotubes and wherein the ferritic material comprises ferromagnetic nanowires, and wherein the carbon nanotubes are blended with said ferritic material, optionally with said ferromagnetic nanowires, in an amount of 1.0 wt% to 7.0 wt%, preferably 1.0 wt% to 6.0 wt%, more preferably 1.5 wt% to 5.5 wt%, still more preferably 4.0 wt% to 5.0 wt%, and/or in such a way to keep the second layer (1c") substantially electrically insulating.

7. A plate (1) according to one or more of preceding claims, wherein the ferritic material comprises at least one of the compounds of the following list: a nickel-manganese ferritic compound, a nickel-copper-zinc ferritic compound, a manganese-zinc ferritic compound, a carbon ferrite compound.

8. A plate (1) according to claim 7, wherein the nickel-manganese ferritic compound comprises a Ni_{0,5}Mn_{0,5}Fe₂O₄ compound or wherein the nickel-copper-zinc ferritic compound is a Ni_{0.60-y}Cu_{y}Zn_{0,42}Fe_{1,98}O_{0,39} compound, optionally comprising Bi₂O₃, or wherein the manganese-zinc ferritic compound comprises a (MnₓZn_{y}Fe₂⁺¹_{-x-y})Fes⁺²O₄ compound.

9. A plate (1) according to one or more of the preceding claims, wherein said coating layer comprises an auxiliary layer (1a), the auxiliary layer (1a) being in substantial contact with the substrate layer (1s), the first layer and the auxiliary layer (1a) comprising said boron nitride compound, optionally wherein said first layer (1c') is arranged at a first side of the second layer (1c") and the auxiliary layer (1a) is arranged at a second side of the second layer (1c"), the first side being opposite to the second side, the auxiliary layer (1a) being optionally in contact with the substrate layer (1s).

10. A plate (1) according to one or more of the preceding claims, wherein said boron nitride compound is configured to cause a substantial distribution of heat induced, in use, by the electromagnetic radiation, in particular by the electromagnetic radiation irradiated by the microwave oven (10), and/or to keep a temperature difference between an hottest portion of said supporting plate (1) and a coldest portion of said supporting plate (1) within the range 20°C - 80°C, preferably within the range 30°C - 70°C, more preferably within the range 40°C - 60°C.

11. A plate (1) according to one or more of the preceding claims, wherein the coating layer (1c) has a textured surface and comprises a plurality of tiles (1t) abutting from the substrate layer (1s) or comprises a plurality of venting openings (1v) configured for allowing a venting of any gaseous residue trapped in the coating layer (1c) and/or in the substrate layer (1s).

12. A plate (1) according to one or more of the preceding claims, the substrate layer (1s) having a first side and a second side, the first side being configured for being contacted by the food items and the second side being opposite to the first side, wherein the coating layer (1c) is arranged at the second side of the substrate layer (1s), optionally with a substantial thickness uniformity.

13. A plate (1) according to one or more of the preceding claims, wherein the coating layer (1c) is a food-compatible coating layer, optionally wherein the plate (1) comprises a second coating layer (1c), the first coating layer (1c) being arranged at a first side of the substrate layer (1s) and the second coating layer (1c) being arranged at a second side of the substrate layer (1s), the second side being opposite to the first side.

14. A plate (1) according to one or more of the preceding claims, wherein the coating layer (1c) is configured to reach at least a surface temperature of 200°C, preferably at least of 210°C, more preferably at least of 220°C in 3 minutes, when heated by a microwave oven (10) irradiating an electromagnetic radiation at a power of at least 750W or of at least 950W.

15. An assembly comprising:
i) a microwave oven (10) comprising a microwave source, a cavity (11) and guiding means, the microwave source being configured for generating an electromagnetic radiation, the cavity (11) being configured for accommodating food items to be heated or cooked or thawed, the guiding means being configured for allowing the electromagnetic radiation to be transferred from the microwave source to the cavity (11), and
ii) a plate (1) configured to be placed in the cavity (11) of the microwave oven (10),
wherein the plate (1) is according to one or more of the preceding claims.

## Patentansprüche

1. Eine Platte (1) für einen Mikrowellen-Herd bzw. -Ofen (10), umfassend:
- eine Substratschicht (1s), die dazu konfiguriert ist, Lebensmittel zu tragen, die erhitzt oder gekocht oder aufgetaut werden sollen, die insbesondere im genannten Mikrowellenofen (10) erhitzt oder gekocht oder aufgetaut werden sollen, und
- mindestens eine Beschichtung bzw. Überzugsschicht (1c), die zumindest teilweise an die Substratschicht (1s) angrenzt und mit dieser in Kontakt steht, wobei die Überzugsschicht (1c) so konfiguriert ist, dass sie im Gebrauch mittels einer elektromagnetischen Strahlung erwärmt wird, insbesondere mittels einer elektromagnetischen Strahlung, die vom Mikrowellenofen (10) ausgestrahlt wird,
wobei die Überzugsschicht (1c) eine mehrschichtige Beschichtung ist, die zumindest eine erste Schicht (1c') und eine zweite Schicht (1c") umfasst,
**dadurch gekennzeichnet, dass** die erste Schicht (1 c') eine Bornitrid-Verbindung umfasst und die zweite Schicht (1c') ein ferritisches Material umfasst.

2. Eine Platte (1) nach Anspruch 1, wobei die Substratschicht (1s) ein elektrisch isolierendes Material umfasst, wobei das genannte elektrisch isolierende Material insbesondere Glaskeramik und/oder glasfaserverstärkten Kunststoff umfasst.

3. Eine Platte (1) nach Anspruch 1 oder 2, wobei die zweite Schicht (1c") eine Polymermatrix umfasst, wobei die Polymermatrix mit einem Silikon versehen ist, und wobei die Polymermatrix ein präpolymerisiertes Zweikomponenten-Polymer umfasst, wobei optional die zweite Schicht (1c") eine ferritische Polymer-Kohlenstoff-Verbundschicht ist.

4. Eine Platte (1) nach einem oder mehreren der vorstehenden Ansprüche, wobei die erste Schicht (1 c') eine äußere, oberflächliche Schicht ist und wobei die zweite Schicht (1c") in Kontakt mit der Substratschicht (1s) steht, wobei die genannte zweite Schicht (1c") zwischen der Substratschicht (1s) und der ersten Schicht (1c') angeordnet ist.

5. Eine Platte (1) nach einem oder mehreren der vorstehenden Ansprüche, wobei die zweite Schicht (1c") ein Kohlenstoffmaterial umfasst und wobei die zweite Schicht (1c") eine Verbundschicht ist, in der das Kohlenstoffmaterial mit dem ferritischen Material vermischt, gegebenenfalls gleichmäßig vermischt ist.

6. Eine Platte (1) nach Anspruch 5, wobei das Kohlenstoffmaterial Kohlenstoff-Nanoröhren umfasst und wobei das ferritische Material ferromagnetische Nanodrähte umfasst, und wobei die Kohlenstoff-Nanoröhren vermischt werden mit dem genannten ferritischen Material, optional mit den genannten ferromagnetischen Nanodrähten, in einer Menge von 1,0 Gew.-% bis 7,0 Gew.-%, bevorzugt 1,0 Gew.-% bis 6,0 Gew.-%, stärker bevorzugt 1,5 Gew.-% bis 5,5 Gew.-%, noch stärker bevorzugt 4,0 Gew.-% bis 5,0 Gew.-%, und/oder derart, dass die zweite Schicht (1c") im Wesentlichen elektrisch isolierend bleibt.

7. Eine Platte (1) nach einem oder mehreren der vorstehenden Ansprüche, wobei das ferritische Material mindestens eine der Verbindungen aus der folgenden Liste umfasst: eine ferritische Nickel-Mangan-Verbindung, eine ferritische Nickel-Kupfer-Zink-Verbindung, eine ferritische Mangan-Zink-Verbindung, eine Kohlenstoff-Ferrit-Verbindung.

8. Eine Platte (1) nach Anspruch 7, wobei die ferritische Nickel-Mangan-Verbindung eine Ni_{0,5}Mn_{0,5}Fe₂O₄-Verbindung umfasst, oder wobei die ferritische Nickel-Kupfer-Zink-Verbindung eine Ni_{0,60-y}Cu_{y}Zn_{0,42}Fe_{1,98}O_{0,39}-Verbindung ist, die optional Bi₂O₃ umfasst, oder wobei die ferritische Mangan-Zink-Verbindung eine (MnₓZn_{y}Fe₂⁺¹_{-x-y})Fe₃⁺²O₄-Verbindung umfasst.

9. Eine Platte (1) nach einem oder mehreren der vorstehenden Ansprüche, wobei die genannte Überzugsschicht eine Hilfsschicht (1a) umfasst, wobei die Hilfsschicht (1a) im Wesentlichen in Kontakt mit der Substratschicht (1s) steht, wobei die erste Schicht und die Hilfsschicht (1a) die genannte Bornitrid-Verbindung umfassen, wobei optional die genannte erste Schicht (1 c') an einer ersten Seite der zweiten Schicht (1c") und die Hilfsschicht (1a) an einer zweiten Seite der zweiten Schicht (1c") angeordnet ist, wobei die erste Seite der zweiten Seite gegenüberliegt, und die Hilfsschicht (1a) optional in Kontakt mit der Substratschicht (1s) steht.

10. Eine Platte (1) nach einem oder mehreren der vorstehenden Ansprüche, wobei die genannte Bornitrid-Verbindung so konfiguriert ist, dass sie im Gebrauch eine substantielle Verteilung der durch die elektromagnetische Strahlung, insbesondere durch die vom Mikrowellenofen (10) eingestrahlte elektromagnetische Strahlung, induzierten Wärme bewirkt, und/oder dass sie eine Temperaturdifferenz zwischen einem wärmsten Abschnitt der genannten Trägerplatte (1) und einem kältesten Abschnitt der genannten Trägerplatte (1) im Bereich von 20°C - 80°C, bevorzugt im Bereich von 30°C - 70°C, stärker bevorzugt im Bereich von 40°C - 60°C, hält.

11. Eine Platte (1) nach einem oder mehreren der vorstehenden Ansprüche, wobei die Überzugsschicht (1c) eine texturierte Oberfläche aufweist und eine Vielzahl von Plättchen (*tiles*) (1t) umfasst, die von der Substratschicht (1s) anliegen, oder eine Vielzahl von Entlüftungsöffnungen (1v) umfasst, die so konfiguriert sind, dass sie ein Entlüften von gasförmigen Rückständen ermöglichen, die in der Überzugsschicht (1c) und/oder in der Substratschicht (1s) eingeschlossen sind.

12. Eine Platte (1) nach einem oder mehreren der vorstehenden Ansprüche, wobei die Substratschicht (1s) eine erste Seite und eine zweite Seite aufweist, wobei die erste Seite dazu konfiguriert ist, von den Lebensmitteln berührt zu werden, und wobei die zweite Seite der ersten Seite gegenüberliegt, wobei die Überzugsschicht (1c) an der zweiten Seite der Substratschicht (1s) angeordnet ist, optional mit einer wesentlichen Dickengleichmäßigkeit.

13. Eine Platte (1) nach einem oder mehreren der vorstehenden Ansprüche, wobei die Überzugsschicht (1c) eine lebensmittelverträgliche Überzugsschicht ist, wobei optional die Platte (1) eine zweite Überzugsschicht (1c) umfasst, wobei die erste Überzugsschicht (1c) an einer ersten Seite der Substratschicht (1s) angeordnet ist und die zweite Überzugsschicht (1c) an einer zweiten Seite der Substratschicht (1s) angeordnet ist, wobei die zweite Seite der ersten Seite gegenüberliegt.

14. Eine Platte (1) nach einem oder mehreren der vorstehenden Ansprüche, wobei die Überzugsschicht (1c) so konfiguriert ist, dass sie eine Oberflächentemperatur von mindestens 200°C, bevorzugt mindestens 210°C, stärker bevorzugt mindestens 220°C in 3 Minuten erreicht, wenn sie durch einen Mikrowellenofen (10) erhitzt wird, der eine elektromagnetische Strahlung mit einer Leistung von mindestens 750W oder mindestens 950W ausstrahlt.

15. Eine Anordnung, die Folgendes umfasst:
i) einen Mikrowellen-Herd bzw. -Ofen (10), der eine Mikrowellenquelle, einen Hohlraum (11) und Führungsmittel umfasst, wobei die Mikrowellenquelle zur Erzeugung von elektromagnetischer Strahlung konfiguriert ist, der Hohlraum (11) zur Aufnahme von Lebensmitteln konfiguriert ist, die erwärmt oder gekocht oder aufgetaut werden sollen, und die Führungsmittel dazu konfiguriert sind, die Übertragung der elektromagnetischen Strahlung von der Mikrowellenquelle zum Hohlraum (11) zu ermöglichen, und
ii) eine Platte (1), die so konfiguriert ist, dass sie in den Hohlraum (11) des Mikrowellenofens (10) eingesetzt werden kann,
wobei die Platte (1) einem oder mehreren der vorstehenden Ansprüche entspricht.

## Revendications

1. Plaque (1) pour un four à micro-ondes (10), comprenant :
- une couche de substrat (1s) conçue pour supporter des articles alimentaires à chauffer ou à cuire ou à décongeler, en particulier à chauffer ou à cuire ou à décongeler dans ledit four à micro-ondes (10), et
- au moins une couche de revêtement (1c) au moins partiellement juxtaposée et en contact avec la couche de substrat (1s), la couche de revêtement (1c) étant conçue, durant l'utilisation, pour être chauffée à l'aide d'un rayonnement électromagnétique, en particulier à l'aide d'un rayonnement électromagnétique irradié par le four à micro-ondes (10),
la couche de revêtement (1c) étant un revêtement multicouche comprenant au moins une première couche (1c') et une seconde couche (1c"),
**caractérisée en ce que** la première couche (1c') comprend un composé de nitrure de bore et que la seconde couche (1c") comprend un matériau ferritique.

2. Plaque (1) selon la revendication 1, la couche de substrat (1s) comprenant un matériau électriquement isolant, ledit matériau électriquement isolant comprenant en particulier du plastique renforcé de vitrocéramique et/ou de fibres de verre.

3. Plaque (1) selon la revendication 1 ou la revendication 2, la seconde couche (1c") comprenant une matrice polymère, la matrice polymère étant fournie avec une silicone, et la matrice polymère comprenant un polymère pré-polymérisé à deux composants, éventuellement la seconde couche (1c") étant une couche composite ferritique-polymère-carbone.

4. Plaque (1) selon l'une ou plusieurs des revendications précédentes, la première couche (1 c') étant une couche superficielle, externe et la seconde couche (1c") se trouvant en contact avec la couche de substrat (1s), ladite seconde couche (1c") étant interposée entre la couche de substrat (1s) et la première couche (1c').

5. Plaque (1) selon l'une ou plusieurs des revendications précédentes, la seconde couche (1c") comprenant un matériau carboné et la seconde couche (1c") étant une couche composite dans laquelle le matériau carboné est mélangé, éventuellement uniformément mélangé, avec le matériau ferritique.

6. Plaque (1) selon la revendication 5, le matériau carboné comprenant des nanotubes de carbone et le matériau ferritique comprenant des nanofils ferromagnétiques, et les nanotubes de carbone étant mélangés avec ledit matériau ferritique, éventuellement avec lesdits nanofils ferromagnétiques, en une quantité de 1,0 % en pds à 7,0 % en pds, préférablement de 1,0 % en pds à 6,0 % en pds, plus préférablement de 1,5 % en pds à 5,5 % en pds, encore plus préférablement de 4,0 % en pds à 5,0 % en pds, et/ou d'une manière permettant de maintenir la seconde couche (1c") sensiblement électriquement isolante.

7. Plaque (1) selon l'une ou plusieurs des revendications précédentes, le matériau ferritique comprenant au moins l'un des composés de la liste suivante : un composé de nickel-manganèse ferritique, un composé de nickel-cuivre-zinc ferritique, un composé de manganèse-zinc ferritique, un composé carboné de ferrite.

8. Plaque (1) selon la revendication 7, le composé de nickel-manganèse ferritique comprenant un composé de Ni_{0,5}Mn_{0,5}Fe₂O₄ ou le composé de nickel-cuivre-zinc ferritique étant un composé de Ni_{0,60-y}Cu_{y}Zn_{0,42}Fe_{1,98}O_{0,39}, éventuellement comprenant du Bi₂O₃, ou le composé de manganèse-zinc ferritique comprenant un composé de (MnₓZn_{y}Fe₂⁺¹_{x-y})Fe₃⁺²O₄.

9. Plaque (1) selon l'une ou plusieurs des revendications précédentes, ladite couche de revêtement comprenant une couche auxiliaire (1a), la couche auxiliaire (1a) se trouvant en contact substantiel avec la couche de substrat (1s), la première couche et la couche auxiliaire (1a) comprenant ledit composé de nitrure de bore, éventuellement ladite première couche (1c') étant disposée au niveau d'un premier côté de la seconde couche (1c") et la couche auxiliaire (1a) étant disposée au niveau d'un second côté de la seconde couche (1c"), le premier côté étant opposé au second côté, la couche auxiliaire (1a) étant éventuellement en contact avec la couche de substrat (1s).

10. Plaque (1) selon l'une ou plusieurs des revendications précédentes, ledit composé de nitrure de bore étant conçu pour amener une distribution substantielle de chaleur induite, durant l'utilisation, par le rayonnement électromagnétique, en particulier par le rayonnement électromagnétique irradié par le four à micro-ondes (10), et/ou maintenir une différence de température entre une partie la plus chaude de ladite plaque (1) de support et une partie la plus froide de ladite plaque (1) de support à l'intérieur de la plage de 20°C à 80°C, préférablement à l'intérieur de la plage de 30°C à 70°C, plus préférablement à l'intérieur de la plage de 40°C à 60°C.

11. Plaque (1) selon l'une ou plusieurs des revendications précédentes, la couche de revêtement (1c) ayant une surface texturée et comprenant une pluralité de carreaux (1t) venant en butée depuis la couche de substrat (1s) ou comprenant une pluralité d'ouvertures de ventilation (1v) conçues pour permettre une ventilation de tout résidu gazeux piégé dans la couche de revêtement (1c) et/ou dans la couche de substrat (1s).

12. Plaque (1) selon l'une ou plusieurs des revendications précédentes, la couche de substrat (1s) ayant un premier côté et un second côté, le premier côté étant conçu pour se trouver en contact avec les articles alimentaires et le second côté étant opposé au premier côté, la couche de revêtement (1c) étant disposée au niveau du second côté de la couche de substrat (1s), éventuellement avec une uniformité d'épaisseur substantielle.

13. Plaque (1) selon l'une ou plusieurs des revendications précédentes, la couche de revêtement (1c) étant une couche de revêtement à compatibilité alimentaire, éventuellement la plaque (1) comprenant une seconde couche de revêtement (1c), la première couche de revêtement (1c) étant disposée au niveau d'un premier côté de la couche de substrat (1s) et la seconde couche de revêtement (1c) étant disposée au niveau d'un second côté de la couche de substrat (1s), le second côté étant opposé au premier côté.

14. Plaque (1) selon l'une ou plusieurs des revendications précédentes, la couche de revêtement (1c) étant conçue pour atteindre au moins une température de surface de 200°C, préférablement d'au moins 210°C, plus préférablement d'au moins 220°C en 3 minutes, lorsque chauffée par un four à micro-ondes (10) irradiant un rayonnement électromagnétique à une puissance d'au moins 750 W ou d'au moins 950 W.

15. Ensemble comprenant :
i) un four à micro-ondes (10) comprenant une source de micro-ondes, une cavité (11) et un moyen de guidage, la source de micro-ondes étant conçue pour générer un rayonnement électromagnétique, la cavité (11) étant conçue pour loger des articles alimentaires à chauffer ou à cuire ou à décongeler, le moyen de guidage étant conçu pour permettre au rayonnement électromagnétique d'être transféré de la source de micro-ondes vers la cavité (11), et
ii) une plaque (1) conçue pour être placée dans la cavité (11) du four à micro-ondes (10),
la plaque (1) étant selon l'une ou plusieurs des revendications précédentes.
